(19) **Europäisches Patentamt / European Patent Office / Office européen des brevets**

(11) **EP 4 692 232 A1**

(12) **EUROPEAN PATENT APPLICATION**
published in accordance with Art. 153(4) EPC

(43) Date of publication:
**11.02.2026 Bulletin 2026/07**

(21) Application number: 24780453.7

(22) Date of filing: 27.03.2024

(51) International Patent Classification (IPC):
$C08L\ 67/02^{(2006.01)}$    $C08G\ 63/181^{(2006.01)}$
$C08K\ 3/013^{(2018.01)}$    $C08K\ 3/105^{(2018.01)}$
$C08K\ 3/26^{(2006.01)}$    $C08L\ 67/03^{(2006.01)}$
$C08L\ 101/16^{(2006.01)}$

(52) Cooperative Patent Classification (CPC):
C08G 63/181; C08K 3/013; C08K 3/105;
C08K 3/26; C08L 67/02; C08L 67/03; C08L 101/16

(86) International application number:
**PCT/JP2024/012259**

(87) International publication number:
**WO 2024/204351 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 31.03.2023  JP 2023058020
31.03.2023  JP 2023058021

(71) Applicant: **Mitsubishi Chemical Corporation**
**Tokyo 100-8251 (JP)**

(72) Inventors:
• YASUI, Koji
  Tokyo 100-8251 (JP)
• MURAKAMI, Ryo
  Tokyo 100-8251 (JP)
• OZEKI, Yuutaro
  Tokyo 100-8251 (JP)

(74) Representative: **Hoffmann Eitle**
**Patent- und Rechtsanwälte PartmbB**
**Arabellastraße 30**
**81925 München (DE)**

(54) **BIODEGRADABLE RESIN COMPOSITION AND MOLDED BODY**

(57)　To provide a biodegradable resin composition excellent in heat stability during heating and melting and excellent in hydrolysis stability during use, and a molded body thereof. Problems are solved by a biodegradable resin composition including a biodegradable resin (A) and a zinc element, in which a content of the zinc element is 0.001 ppm by mass or more and 7000 ppm by mass or less, and the biodegradable resin (A) at least contains any of (i) a polyester containing an aliphatic diol-derived constituent unit and an aliphatic dicarboxylic acid-derived constituent unit as main constituent units, and (ii) a polyester containing an aliphatic diol-derived constituent unit, an aliphatic dicarboxylic acid-derived constituent unit, and an aromatic dicarboxylic acid-derived constituent unit as main constituent units.

EP 4 692 232 A1

**Description**

FIELD

The present invention relates to a biodegradable resin composition and a molded body thereof.

BACKGROUND

In recent years, there have emerged concerns about ecosystems or environmental contamination due to, for example, dumping of plastic products in the ocean. For example, regulations or laws for prohibiting use of disposable plastic shopping bags, and disposable plastic containers, cups, dishes, and the like in the retailing industry have been increasingly established in the EU, and various regulations have been increasingly established in all the countries of the world from the viewpoint of, for example, prevention of environmental contamination. Recently, there has been a demand for compostable, biodegradable plastic products that achieve both moldability and quality in terms of cost and practical use.

There are conventionally known plastics (resins) having biodegradability, such as polybutylene succinate (hereinafter, abbreviated as "PBS"), polybutylene terephthalate/adipate (hereinafter, abbreviated as "PBAT"), polybutylene succinate/terephthalate (hereinafter, abbreviated as "PBST"), polylactic acid (hereinafter, abbreviated as "PLA"), polybutylene succinate/adipate (hereinafter, abbreviated as "PBSA"), and polyhydroxyalkanoate (hereinafter, abbreviated as "PHA"). Examples of PHA include poly (3-hydroxybutyrate) (hereinafter, abbreviated as "PHB"), poly(3-hydroxybutyrate/3-hydroxyvalerate) (hereinafter, abbreviated as "PHBV"), poly(3-hydroxybutyrate/3-hydroxyhexanoate) (hereinafter, abbreviated as "PHBH"), and poly(3-hydroxybutyrate/4-hydroxybutyrate).

These biodegradable polyesters are feared to undergo hydrolysis by water in the environment because of their structures and thus degrade during processing, storage, and use, leading to deterioration of physical properties.

As a method for solving the above problems, Patent Document 1 has indicated that a polycarbodiimide compound and a specified antioxidant are used in combination and compounded in specified amounts in a biodegradable plastic, to allow the resulting biodegradable plastic composition to be enhanced in hydrolysis resistance and heat resistance.

[CITATION LIST]

[PATENT DOCUMENTS]

[Patent Document 1] Japanese Unexamined Patent Publication No. 2003-313436

SUMMARY

[TECHNICAL PROBLEM]

The technique described in Patent Document 1 is a technique for suppression of hydrolysis by a reaction of carbodiimide with a biodegradable polyester, and simultaneously has the problems of remarkably reducing the biodegrading speed, prolonging a step of degradation after use, and causing the residue in the environment for a long period.

The present invention has been made in view of the above problems of conventional arts, and an object thereof is to provide an excellent material having hydrolysis resistance and biodegradability in a well-balanced manner, as compared with conventional measures for imparting hydrolysis resistance.

[SOLUTION TO PROBLEM]

The present inventors have made intensive studies in order to solve the above problems, and as a result, have found that, by compounding a specified amount of a zinc element into a biodegradable resin, the resulting biodegradable resin composition exhibits improved heat stability and hydrolysis stability.

Specifically, the gist of the present invention consists in the following [1] to [12].

[1] A biodegradable resin composition including a biodegradable resin (A) and a zinc element, wherein

a content of the zinc element is 0.001 ppm by mass or more and 7000 ppm by mass or less, and
the biodegradable resin (A) at least contains any of

(i) a polyester containing an aliphatic diol-derived constituent unit and an aliphatic dicarboxylic acid-derived constituent unit as main constituent units, and

(ii) a polyester containing an aliphatic diol-derived constituent unit, an aliphatic dicarboxylic acid-derived constituent unit, and an aromatic dicarboxylic acid-derived constituent unit as main constituent units.

[2] The biodegradable resin composition according to [1], wherein the aliphatic dicarboxylic acid-derived constituent unit has 2 to 30 carbon atoms.

[3] The biodegradable resin composition according to [1] or [2], wherein the aromatic dicarboxylic acid-derived constituent unit has 6 to 12 carbon atoms.

[4] The biodegradable resin composition according to any one of [1] to [3], wherein the aliphatic diol-derived constituent unit has 2 to 30 carbon atoms.

[5] The biodegradable resin composition according to any one of [1] to [4], wherein the aromatic dicarboxylic acid-derived constituent unit is terephthalic acid.

[6] The biodegradable resin composition according to any one of [1] to [5], wherein the aliphatic dicarboxylic acid-derived constituent unit is succinic acid.

[7] The biodegradable resin composition according to any one of [1] to [6], wherein a content of the aliphatic dicarboxylic acid-derived constituent unit is 40% by mol or more based on a total of the aliphatic dicarboxylic acid-derived constituent unit and the aromatic dicarboxylic acid-derived constituent unit contained in the entire resin in the biodegradable resin composition.

[8] The biodegradable resin composition according to any one of [1] to [7], wherein a bio-based content of the biodegradable resin (A), as calculated based on ASTM D6866, is 20% or more.

[9] The biodegradable resin composition according to any one of [1] to [8], further including an inorganic filler.

[10] The biodegradable resin composition according to [9], including calcium carbonate as the inorganic filler.

[11] The biodegradable resin composition according to [10], wherein the calcium carbonate is heavy calcium carbonate.

[12] A molded body formed with the biodegradable resin composition according to any one of [1] to [11].

[ADVANTAGEOUS EFFECTS OF INVENTION]

According to the present invention, it is possible to provide a biodegradable resin composition excellent in heat stability during heating and melting and excellent in hydrolysis stability during use, and a molded body thereof.

DESCRIPTION OF EMBODIMENTS

The present invention is not limited to the following description, and can be modified as desired and carried out without departing from the gist of the present invention. Herein, in a case where "to" is used with numerical values or physical property values before and after "to", it expresses the range including the values of the lower limit and the upper limit serving as end points.

Herein, the expression "A or B" can be interchangeably read with "at least one selected from the group consisting of A and B".

Herein, "heat resistance" and "heat stability" have the same meanings, and "hydrolysis resistance" and "hydrolysis stability" have the same meanings.

Herein, plural embodiments are described, and various conditions of each thereof can be mutually applied, as long as these are applicable.

<Biodegradable resin composition>

A biodegradable resin composition according to one embodiment of the present invention (hereinafter, also simply referred to as "biodegradable resin composition" or "resin composition".) includes a biodegradable resin (A) and a zinc element, in which the content of the zinc element is 0.001 ppm by mass or more and 7000 ppm by mass or less, and the biodegradable resin (A) at least contains any of (i) a polyester containing an aliphatic diol-derived constituent unit and an aliphatic dicarboxylic acid-derived constituent unit as main constituent units, and (ii) a polyester containing an aliphatic diol-derived constituent unit, an aliphatic dicarboxylic acid-derived constituent unit, and an aromatic dicarboxylic acid-derived constituent unit as main constituent units.

The biodegradable resin composition includes the zinc element at a content of 0.001 ppm by mass or more and 7000 ppm by mass or less from the viewpoints of heat resistance and hydrolysis resistance.

The method for allowing the biodegradable resin composition to contain the zinc element is not particularly limited, and single zinc may be contained or, in a case where any other component is contained in the composition, the zinc element may be contained in the state of being contained in such other component.

Examples of a composition containing the zinc element and such other component include zinc salts such as zinc acetate-dihydrate, zinc carbonate, zinc chloride, fatty acid zinc, zinc oxalate, zinc phosphate, zinc oxide, and calcium carbonate including the zinc element, such as heavy calcium carbonate. Heavy calcium carbonate is calcium carbonate produced by physically grinding-classifying natural limestone, unlike light calcium carbonate, which is chemically produced with limestone as a raw material.

The content of the zinc element in the biodegradable resin composition is not particularly limited as long as it is 0.001 ppm by mass or more and 7000 ppm by mass or less, and is preferably 0.01 ppm by mass or more, further preferably 0.05 ppm by mass or more, particularly preferably 0.1 ppm by mass or more, and preferably 5000 ppm by mass or less, more preferably 3000 ppm by mass or less, further particularly preferably 2000 ppm by mass or less, particularly preferably 1000 ppm by mass or less.

In a case where the content is equal to or more than the lower limit of the above range, heat stability and hydrolysis resistance of the biodegradable resin composition are ensured. In a case where the content is equal to or less than the upper limit of the above range, decomposition of the biodegradable resin composition due to any zinc component-derived acid or alkali hardly occurs.

The content of the zinc element in the biodegradable resin composition can be determined by weighing a specimen, adding nitric acid to dissolve the specimen, then using pure water to provide a constant volume, and performing a standard addition method with an ICP emission spectrometer (Agilent 5800 manufactured by Agilent Technologies).

[Biodegradable resin (A)]

The biodegradable resin (A) at least contains any of (i) a polyester containing an aliphatic diol-derived constituent unit and an aliphatic dicarboxylic acid-derived constituent unit as main constituent units, and (ii) a polyester containing an aliphatic diol-derived constituent unit, an aliphatic dicarboxylic acid-derived constituent unit, and an aromatic dicarboxylic acid-derived constituent unit as main constituent units.

Herein, the aliphatic diol-derived constituent unit is also called "aliphatic diol unit", the aliphatic dicarboxylic acid-derived constituent unit is also called "aliphatic dicarboxylic acid unit", and the aromatic dicarboxylic acid-derived constituent unit is also called "aromatic dicarboxylic acid unit".

The content of the biodegradable resin (A) in the biodegradable resin composition is not particularly limited, and is usually 50% by mass or more, preferably 60% by mass or more, more preferably 70% by mass or more, further preferably 80% by mass or more, and particularly preferably 90% by mass or more from the viewpoints of moldability and mechanical properties. The upper limit needs not be particularly set, and may be 100% by mass or less.

Hereinafter, each constituent unit of the biodegradable resin (A) is described.

(Aliphatic diol)

The aliphatic diol used here can be any aliphatic diol usually used as a raw material for polyesters without any particular limitation.

The number of carbon atoms in the aliphatic diol is not particularly limited, and is preferably 2 to 30, more preferably 2 to 20, further preferably 4 to 12, and particularly preferably 4 to 10.

In a case where the number of carbon atoms in the aliphatic diol is equal to or more than the lower limit of the above range, biodegradability and mechanical properties are well-balanced. In a case where the number of carbon atoms in the aliphatic diol is equal to or less than the upper limit of the above range, crystallinity is favorable.

Examples of the aliphatic diol include alkylene diol such as ethylene glycol, 1,2-propanediol, 1,3-propanediol, 1,4-butanediol, 1,5-pentanediol, 1,6-hexanediol, 1,7-heptanediol, 1,8-octanediol, 1,9-nonanediol, 1,10-decanediol, or neopentyl glycol, oxyalkylene diol such as diethylene glycol, polyethylene glycol, polypropylene glycol, or polytetramethylene ether glycol; or cycloalkylene diol such as 1,2-cyclohexanediol, 1,4-cyclohexanediol, 1,2-cyclohexanedimethanol, or 1,4-cyclohexanedimethanol, and in particular, ethylene glycol, 1,4-butanediol, or 1,10-decanediol is preferred and ethylene glycol or 1,4-butanediol is particularly preferred from the viewpoints of mechanical properties, biodegradability, and heat resistance. Such an aliphatic diol may be one which is a derivative thereof or one which is not a derivative thereof.

The aliphatic diol compound may also be a compound having a structure obtained by mutual dehydration-condensation of one or two or more kinds of such aliphatic diol compounds.

The above aliphatic diols may be used singly or in combination of two or more kinds thereof.

Ethylene glycol, 1,3-propanediol, or 1,4-butanediol used here can be a plant raw material-derived substance.

- Content of aliphatic diol unit in biodegradable resin (A)

The content of the aliphatic diol unit in the biodegradable resin (A) is not particularly limited, and is usually 10% by mol or more, preferably 30% by mol or more, more preferably 45% by mol or more, further preferably 49% by mol or more, and usually 55% by mol or less, further preferably 50% by mol or less based on 100% by mol of all the constituent units forming the biodegradable resin (A), from the viewpoint of mechanical properties.

(Dicarboxylic acid)

The biodegradable resin (A) may be in a mode in which the aliphatic dicarboxylic acid-derived constituent unit is contained as the dicarboxylic acid-derived constituent unit in main constituent units (hereinafter, also referred to as "Mode A".) or may be in a mode in which, in addition to the constituent unit, the aromatic dicarboxylic acid-derived constituent unit is further contained in main constituent units (hereinafter, also referred to as "Mode B".), or both of the polyester of Mode A and the polyester of Mode B may be used, from the viewpoint that excellent heat stability and hydrolysis resistance can be ensured.
The number of carbon atoms in the aliphatic dicarboxylic acid is not particularly limited, and is preferably 2 to 30, more preferably 4 to 20, further preferably 4 to 12, and particularly preferably 4 to 10.
In a case where the number of carbon atoms in the aliphatic dicarboxylic acid is equal to or more than the lower limit of the above range, heat stability is excellent. In a case where the number of carbon atoms in the aliphatic dicarboxylic acid is equal to or less than the upper limit of the above range, biodegradability and heat stability are excellent.
Specific examples of the aliphatic dicarboxylic acid include aliphatic dicarboxylic acid such as oxalic acid, malonic acid, succinic acid, succinic anhydride, glutaric acid, adipic acid, pimelic acid, suberic acid, azelaic acid, sebacic acid, undecadicarboxylic acid, dodecadicarboxylic acid, or dimer acid, and in particular, aliphatic dicarboxylic acid such as succinic acid, succinic anhydride, adipic acid, or sebacic acid is preferred from the viewpoints of heat resistance and crystallinity. In particular, an aliphatic dicarboxylic acid having 4 carbon atoms such as succinic acid or succinic anhydride is preferred, and succinic acid is more preferred from the viewpoints of biodegradability, price, and heat stability.
The number of carbon atoms in the aromatic dicarboxylic acid is not particularly limited, and is preferably 6 to 12, more preferably 6 to 8.
In a case where the number of carbon atoms in the aromatic dicarboxylic acid is equal to or more than the lower limit of the above range, heat stability is favorable. In a case where the number of carbon atoms in the aromatic dicarboxylic acid is equal to or less than the upper limit of the above range, biodegradability is favorable.
Specific examples of the aromatic dicarboxylic acid include 2,5-furandicarboxylic acid, phthalic acid, isophthalic acid, terephthalic acid, dibromoisophthalic acid, sulfoisophthalic acid, 1,4-phenylenedioxydicarboxylic acid, 4,4'-diphenyldicarboxylic acid, 4,4'-diphenyl ether dicarboxylic acid, 4,4'-diphenyl ketone dicarboxylic acid, 4,4'-diphenoxyethanedicarboxylic acid, 4,4'-diphenylsulfonedicarboxylic acid, 2,6-naphthalenedicarboxylic acid, hexahydrophthalic acid, hexahydroisophthalic acid, or hexahydroterephthalic acid, and in particular, 2,5-furandicarboxylic acid or terephthalic acid is preferred, and terephthalic acid is particularly preferred from the viewpoints of availability of a raw material, and biodegradability.
The aromatic dicarboxylic acid may be one which is a derivative thereof or one which is not a derivative thereof. For example, a derivative of any of the above-exemplified aromatic dicarboxylic acids is preferred, and in particular, examples include a lower alkyl ester thereof having 1 or more and 4 or less carbon atoms, or an acid anhydride thereof. Specific examples of such an aromatic dicarboxylic acid compound derivative include a lower alkyl ester of any of the above-exemplified aromatic dicarboxylic acids, such as methyl ester, ethyl ester, propyl ester, or butyl ester thereof; or a cyclic acid anhydride of any of the above-exemplified aromatic dicarboxylic acids, such as phthalic anhydride.
Such aliphatic dicarboxylic acids and aromatic dicarboxylic acids described above may be each used singly or in combination of two or more kinds thereof.
Succinic acid, succinic anhydride, or adipic acid may be a plant raw material-derived substance.

- Content of each dicarboxylic acid unit in biodegradable resin (A)

In the case of Mode A, the content is usually 30% by mol or more, preferably 40% by mol or more, more preferably 45% by mol or more, further preferably 49% by mol or more, and usually 70% by mol or less, preferably 60% by mol or less, more preferably 55% by mol or less, further preferably 50% by mol or less based on 100% by mol of all the constituent units forming the biodegradable resin (A), from the viewpoints of biodegradability and crystallinity.
In the case of Mode B, the content of the aliphatic dicarboxylic acid unit in the biodegradable resin (A) is not particularly limited, and is usually 20% by mol or more, preferably 25% by mol or more, more preferably 27% by mol or more, and usually 50% by mol or less, preferably 40% by mol or less, more preferably 30% by mol or less based on 100% by mol of all the constituent units forming the biodegradable resin (A), from the viewpoints of biodegradability and crystallinity.

In the case of Mode B, the content of the aromatic dicarboxylic acid unit in the biodegradable resin (A) is not particularly limited, and is usually 5% by mol or more, preferably 10% by mol or more, more preferably 20% by mol or more, further preferably 22% by mol or more, and usually 50% by mol or less, preferably 40% by mol or less, more preferably 30% by mol or less based on 100% by mol of all the constituent units forming the biodegradable resin (A), from the viewpoints of biodegradability and crystallinity.

- Content of aliphatic dicarboxylic acid unit contained in entire resin in biodegradable resin composition

The content of the aliphatic dicarboxylic acid unit is preferably 40% by mol or more, more preferably 45% by mol or more, particularly preferably 50% by mol or more based on the total of the aliphatic dicarboxylic acid unit and the aromatic dicarboxylic acid unit contained in the entire resin in the biodegradable resin composition.
In a case where the content is equal to or more than the lower limit of the above range, biodegradability, heat stability and hydrolysis resistance are excellent.
The biodegradable resin composition may have any other resin than the biodegradable resin (A). In this case, the "content of the aliphatic dicarboxylic acid unit contained in the entire resin in the biodegradable resin composition" can be adjusted so as to satisfy the above suitable range by adjusting the amount of the aliphatic dicarboxylic acid unit in such other resin than the biodegradable resin (A).

(Other copolymerizing components)

Other constituent components (other copolymerizing components) than the above diol and dicarboxylic acids may be copolymerized in polyester production. Examples of such a copolymerizing component usable in this case include oxycarboxylic acid such as lactic acid, glycolic acid, hydroxybutyric acid, hydroxycaproic acid, 2-hydroxy-3, 3-dimethylbutyric acid, 2-hydroxy-3-methylbutyric acid, 2-hydroxyisocaproic acid, malic acid, maleic acid, citric acid, or fumaric acid; any ester or lactone of such oxycarboxylic acid, or an oxycarboxylic acid polymer; tri- or higher-functional polyhydric alcohol such as glycerin, trimethylolpropane, or pentaerythritol; or tri- or higher-functional polyvalent carboxylic acid or any anhydride thereof, such as propanetricarboxylic acid, pyromellitic acid or trimellitic acid, benzophenonetetracarboxylic acid, or any anhydride thereof.
A high-viscosity polyester is easily provided by addition of a tri- or higher-functional oxycarboxylic acid, a tri- or higher-functional alcohol, a tri- or higher-functional carboxylic acid, or the like in a small amount. In particular, oxycarboxylic acid such as malic acid, citric acid, or fumaric acid is preferred, and malic acid is particularly preferably used. Examples of a component constituting a tri- or higher-functional polyhydric alcohol unit include glycerin, trimethylolpropane, or pentaerythritol. These may be used singly or as a mixture of two or more kinds thereof.
The content of such a tri- or higher-polyfunctional compound is preferably 0.001 to 5% by mol, more preferably 0.05 to 0.5% by mol based on 100% by mol of the entire dicarboxylic acid component in a polyester raw material. If the content exceeds the upper limit of the range, gel (non-melted product) is easily generated in the resulting polyester, and if the content is less than the lower limit thereof, the advantage due to use of such a polyfunctional compound (usually, the advantage of enabling the resulting polyester to be increased in viscosity) is hardly obtained.

[Characteristics of biodegradable resin (A)]

(Bio-based content)

The bio-based content of the biodegradable resin (A), as calculated based on ASTM D6866, is not particularly limited, and is preferably 10% or more, more preferably 20% or more, further preferably 30% or more, particularly preferably 50% or more from the viewpoint of greenhouse gas reduction, and the upper limit does not need to be particularly specified and may be 100%, 100% or less, 70% or less, or 65% or less. The bio-based content can be controlled by adjusting the proportion of a monomer unit produced from a plant-derived raw material, relative to the entire constituent unit constituting one or more kinds of such biodegradable resins (A). The bio-based content may be satisfied in one kind of the biodegradable resin (A) or may be satisfied in all of one or more kinds of such biodegradable resins (A), and is preferably satisfied in at least one kind of the biodegradable resin (A).

(Intrinsic viscosity)

The intrinsic viscosity (IV, dL/g) of the biodegradable resin (A) is not particularly limited, and the intrinsic viscosity of at least one kind of the biodegradable resin (A) is preferably 1.2 dL/g or more, more preferably 1.4 dL/g or more, particularly preferably 1.6 dL/g or more. The intrinsic viscosity is preferably 2.8 dL/g or less, more preferably 2.5 or less, particularly preferably 2.3 dL/g or less. The intrinsic viscosity may be satisfied in all of one or more kinds of such biodegradable resins (A). If the intrinsic viscosity is less than the lower limit of the above range, a molded article to be obtained hardly achieves sufficient mechanical strength. If the intrinsic viscosity exceeds the upper limit of the above range, the melt viscosity is high during molding and molding is hardly performed.

(Amount of terminal carboxyl group)

The amount of a terminal carboxyl group in the biodegradable resin (A) is not particularly limited, and is usually 80 (equivalents/ton) or less, preferably 60 (equivalents/ton) or less, further preferably 40 (equivalents/ton) or less, particularly preferably 25 (equivalents/ton) or less. Although heat stability and hydrolysis resistance are better as the lower limit is lower, the lower limit is usually 5 (equivalents/ton) or more. If the amount exceeds the upper limit, a reduction in viscosity due to hydrolysis may be remarkably caused and the quality may be remarkably impaired.

(Melt flow rate (MFR))

The melt flow rate (MFR) of the biodegradable resin (A) is not particularly limited, and the MFR of at least one kind of the biodegradable resin (A) is preferably 0.5 to 50 g/10 min in terms of the value measured at 190°C with a load of 2.16 kg based on JIS K7210 (2014). The MFR is more preferably 0.5 to 20 g/10 min, still more preferably 1.0 to 10 g/10 min in a film application or an extrusion molding application. In a case where the MFR is equal to or more than the above lower limit, fluidity necessary for molding is obtained, and in a case where the MFR is equal to or less than the above upper limit, a resin excellent in bubble stability during film formation is obtained. In this regard, the MFR is more preferably 0.5 to 50 g/10 min, still more preferably 3.0 to 40 g/10 min in an injection molding application or a fiber application. The MFR may be satisfied in all of one or more kinds of such biodegradable resins (A). In a case where the MFR is equal to or more than the above lower limit, fluidity necessary for molding is obtained, and in a case where the MFR is equal to or less than the above upper limit, a resin excellent in mechanical properties, for example, impact strength of an injection-molded article is obtained.

(Weight average molecular weight)

The weight average molecular weight (Mw) of the biodegradable resin (A) is not particularly limited, and the weight average molecular weight of at least one kind of the biodegradable resin (A) is preferably 10,000 or more, more preferably 25,000 or more, further preferably 50,000 or more, particularly preferably 100,000 or more, and preferably 1,000,000 or less, more preferably 500,000 or less, particularly preferably 300,000 or less. The weight average molecular weight may be satisfied in all of one or more kinds of such biodegradable resins (A). In a case where the weight average molecular weight (Mw) is equal to or more than the lower limit of the above range, a material excellent in moldability and mechanical properties is obtained. In a case where the weight average molecular weight (Mw) is equal to or less than the upper limit of the above range, the biodegradable resin can be molded at a low temperature of about 100 to 200°C and is excellent.
The weight average molecular weight (Mw) is determined as a reduced value with monodisperse polystyrene, from a measurement value by gel permeation chromatography (GPC) at a measurement temperature of 40°C with chloroform as a solvent.

(Melting point, glass transition temperature, and crystallization temperature)

The melting point (Tm) of the biodegradable resin (A) is not particularly limited, and is usually 50°C or more, preferably 70°C or more, more preferably 80°C or more, further preferably 85°C or more, and usually 200°C or less, preferably 180°C or less, more preferably 150°C or less, further preferably 130°C or less. In a case where the melting point is equal to or more than the lower limit of the above range, the biodegradable resin is excellent from the viewpoints of crystallization and heat resistance. In a case where the melting point is equal to or more than the lower limit of the above range, the biodegradable resin can be molded at a low temperature and is excellent.
The glass transition temperature (Tg) of the biodegradable resin (A) is not particularly limited, and is usually -70°C or more, preferably -50°C or more, more preferably -40°C or more, further preferably -35°C or more, and usually 60°C or less, preferably 30°C or less, more preferably 20°C or less, further preferably 10°C or less. In a case where the glass transition temperature is equal to or more than the lower limit of the above range, crystallinity is favorable. In a case where the glass transition temperature is equal to or more than the lower limit of the above range, a resin excellent in biodegradability is obtained.
In a case where the biodegradable resin is crystalline, the crystallization temperature (crystallization peak temperature) (Tc) of the biodegradable resin (A) is not particularly limited, and is usually 0°C or more, preferably 10°C or more, more preferably 20°C or more, further preferably 30°C or more, and usually 150°C or less, preferably 100°C or less, further preferably 85°C or less. In a case where the crystallization temperature is equal to or more than the lower limit of the above range, a sufficient crystallization rate is realized during molding. In a case where the crystallization temperature is equal to or less than the upper limit of the above range, stable molding can be made.

The melting point, the glass transition temperature, and the crystallization temperature can be measured with a differential scanning calorimeter (product name: DSC220 manufactured by Seiko Future Creation Inc.). Specifically, after about 5 mg of a sample is precisely weighed and melted by heating under a nitrogen stream at a flow rate of 40 mL/min, the crystallization temperature Tc can be measured during cooling at a rate of 10°C/min, and the glass transition temperature and the melting point can be subsequently measured during a temperature rise at a rate of 10°C/min.

The melting point, the glass transition temperature, and the crystallization temperature may be satisfied in one kind of the biodegradable resin (A) or may be satisfied in all of one or more kinds of such biodegradable resin (A), and are preferably satisfied in at least one kind of the biodegradable resin (A).

[Method for producing biodegradable resin (A)]

The method for producing the biodegradable resin (A) is not particularly limited, and a known method can be adopted.

Hereinafter, the method for producing the biodegradable resin (A) is described, but is merely one example, and the method for producing the biodegradable resin (A) is not limited to this mode.

First, a reaction treatment including a treatment for performing an esterification reaction of a raw material including diol and dicarboxylic acid in the presence of a catalyst is performed, and thereafter a polycondensation reaction treatment for performing a polycondensation reaction is performed.

(Esterification reaction treatment)

The esterification reaction is a reaction for converting carboxylic acid into an ester, and the transesterification reaction is a reaction for reacting an ester and an alcohol to interchange main chain moieties thereof. The method for performing the esterification reaction treatment is not particularly limited, and a known method can be adopted.

The esterification reaction treatment and subsequent other treatments can be performed in successive plural reaction tanks or can be performed in a single reaction tank, and are preferably performed in successive plural reaction tanks in order to decrease the variations in physical properties of the resulting polyester.

The reaction temperature of the esterification reaction treatment is not particularly limited as long as it is a temperature at which the esterification reaction can be performed, and is preferably 200°C or more, preferably 210°C or more from the viewpoint that the reaction rate can be increased, and is preferably 250°C or less, preferably 245°C or less, particularly preferably 240°C or less in order to prevent coloration or the like of the polyester.

If the reaction temperature is too low, the esterification reaction rate is lower and a long reaction time is required, thereby leading to an increase of undesired reaction such as decomposition by dehydration of diol. If the reaction temperature is too high, decomposition of diol and dicarboxylic acid occurs and a scattered product is increased in a reaction tank to easily cause generation of foreign materials and easily generate turbidity (haze) in a reaction product. The esterification temperature is preferably a constant temperature. The constant temperature results in a stable rate of esterification. The constant temperature may be a set temperature ± 5°C, preferably ± 2°C.

The reaction atmosphere is not particularly limited, and is preferably an atmosphere of an inert gas such as nitrogen or argon. The reaction pressure is preferably 50 kPa to 200 kPa, more preferably 60 kPa or more, further preferably 70 kPa or more, and preferably 130 kPa or less, more preferably 110 kPa or less.

If the reaction pressure is less than the lower limit of the above range, not only a scattered product is increased in a reaction tank to easily increase the haze of a reaction product and cause generation of foreign materials, but also distillation off of the diol component outside the reaction system increases to easily lead to a reduction in polycondensation reaction rate. If the reaction pressure exceeds the upper limit of the above range, decomposition by dehydration of the diol component increases, thereby leading to a reduction in rate of polycondensation.

The reaction time is not particularly limited, and is preferably 1 hour or more, and preferably 10 hours or less, more preferably 4 hours or less.

In a case where the reaction step includes a polycondensation reaction treatment described later, an esterification reaction product having an esterification rate of 80% or more is preferably subjected to the polycondensation reaction treatment. The polycondensation reaction usually refers to a reaction for an increase in molecular weight of polyester, performed at a reaction pressure of 50 kPa or less. The esterification reaction is usually performed at 50 to 200 kPa preferably in an esterification reaction tank, and the polycondensation reaction is usually performed at 50 kPa or less, preferably 10 kPa or less, preferably in a polycondensation reaction tank. Herein, the esterification rate means the proportion of a dicarboxylic acid component esterified, relative to the entire dicarboxylic acid component in a polyester raw material, and is expressed by the following expression.

Esterification rate (%) = (Saponification value - Acid value)/Saponification value $\times$ 100

The reaction product obtained by the esterification reaction treatment can be continuously subjected to a polycondensation reaction described layer, to efficiently obtain a high-quality polyester-based resin having a low haze and including few foreign materials.

(Polycondensation reaction treatment)

Next, the reaction product obtained by the esterification reaction treatment is subjected to a polycondensation reaction. The polycondensation reaction can be performed with successive plural reaction tanks under reduced pressure.
The reaction pressure in these polycondensation reaction tanks (in particular, final polycondensation reaction tank) is not particularly limited, and is usually 0.01 kPa or more, preferably 0.03 kPa or more, and usually 1.4 kPa or less, preferably 0.4 kPa or less.
If the pressure during the polycondensation reaction is too high, the polycondensation time is longer to accordingly result in a tendency to cause a reduction in molecular weight and coloration due to pyrolysis of polyester, making it difficult to produce a polyester exhibiting sufficient properties for practical use.
In this regard, a procedure for production with ultra-high vacuum polycondensation equipment in which the reaction pressure is less than 0.01 kPa, although the procedure is a preferred mode from the viewpoint of an enhancement in polycondensation reaction rate, requires extremely expensive equipment investment and is disadvantageous in terms of economics.
The reaction temperature is not particularly limited, and is usually 215°C or more, preferably 220°C or more, and usually 270°C or less, preferably 260°C or less. If the reaction temperature is less than the lower limit of the above range, not only the polycondensation reaction rate is low and a long time is taken for production of a polyester having a high degree of polymerization, but also a high-power stirrer is required, and therefore there is a disadvantage in terms of economics. On the other hand, if the reaction temperature exceeds the upper limit of the above range, pyrolysis of a polyester-based resin during production easily occurs, resulting in a tendency to make it difficult to produce a polyester having a high degree of polymerization.
The reaction time is not particularly limited, and is usually 1 hour or more, and usually 15 hours or less, preferably 10 hours or less, more preferably 8 hours. If the reaction time is too short, the reaction is insufficient, which leads to difficulty in providing a polyester having a high degree of polymerization, thereby causing a molded article thereof to be inferior in mechanical properties. On the other hand, if the reaction time is too long, a polyester-based resin is remarkably reduced in molecular weight due to pyrolysis thereof, not only to result in a tendency to cause a molded article thereof to be inferior in mechanical properties, but also to increase the amount of a carboxyl group terminal, which adversely affects durability of the polyester-based resin, due to the pyrolysis.
By controlling the temperature, the time, and the reaction pressure of the polycondensation reaction within the above ranges, a polyester-based resin having a desired intrinsic viscosity can be provided.

(Reaction catalyst)

The esterification reaction and the polycondensation reaction are promoted by use of a reaction catalyst. In the esterification reaction, a sufficient reaction rate can be obtained even without an esterification reaction catalyst. In addition, an esterification reaction catalyst, if present during the esterification reaction, not only leads to the occurrence of an insoluble precipitate in a reaction product due to water generated by the esterification reaction, and sometimes causes loss in transparency (namely, an increase in haze) of the resulting polyester, but also is sometimes formed into a foreign material, and therefore the reaction catalyst is preferably not added and used during the esterification reaction. In a case where the catalyst is added to a gas phase portion in a reaction tank, the haze of the resulting polyester sometimes gets higher and also the catalyst is sometimes formed into a foreign material, and therefore the catalyst is preferably added into a reaction liquid.
The polycondensation reaction hardly progresses without a catalyst, and a catalyst is preferably used. The polycondensation reaction catalyst used here is generally a compound containing at least one of the metal elements in Group 1 to Group 14 in the Periodic Table. Specific examples of such a metal element include scandium, yttrium, samarium, titanium, zirconium, vanadium, chromium, molybdenum, tungsten, tin, antimony, cerium, germanium, zinc, cobalt, manganese, iron, aluminum, magnesium, calcium, strontium, sodium, or potassium. Among them, scandium, yttrium, titanium, zirconium, vanadium, molybdenum, tungsten, zinc, iron, or germanium is preferred, and in particular, titanium, zirconium, tungsten, iron, or germanium is preferred.
Among the above-mentioned metals, metal elements in Group 3 to Group 6 in the Periodic Table, exhibiting Lewis acidity, are preferred in order to reduce the concentration of a polyester terminal which affects heat stability of polyester.

Specific examples include scandium, titanium, zirconium, vanadium, molybdenum, or tungsten, and in particular, titanium or zirconium is preferred in terms of availability, and furthermore, titanium is preferred in terms of reaction activity.

In the present embodiment, the catalyst used here is preferably a compound containing an organic group, such as a carboxylic acid salt, an alkoxy salt/organic sulfonic acid salt or a β-diketonate salt containing the above-described metal element; or an inorganic compound such as an oxide or halide of the metal element, or any mixture thereof.

In the present embodiment, the catalyst, when melted or dissolved during polymerization, leads to a higher polymerization rate, and therefore is preferably a compound which is a liquid or is soluble in an ester low-polymerized product or polyester during polymerization. While polycondensation is preferably performed in the absence of a solvent, a small amount of a solvent may be used in order to dissolve the catalyst nonetheless. Examples of such a solvent for catalyst dissolution include an alcohol such as methanol, ethanol, isopropanol, or butanol, the above-described diol such as ethylene glycol, butanediol, or pentanediol, an ether such as diethyl ether or tetrahydrofuran, a nitrile such as acetonitrile, a hydrocarbon compound such as heptane or toluene, water, or any mixture thereof, and the solvent is used so that the catalyst concentration in a polyester raw material is usually 0.0001% by mass or more, 99% by mass or less. Here, the catalyst which is diluted with a diol such as 1,4-butanediol or ethylene glycol can also be used in order to dissolve the catalyst, and in this case, the diol can also serve as a polyester raw material.

The titanium compound is preferably tetraalkyl titanate or a hydrolysate thereof, and specific examples thereof include tetra-n-propyl titanate, tetraisopropyl titanate, tetra-n-butyl titanate, tetra-t-butyl titanate, tetraphenyl titanate, tetracyclohexyl titanate, or tetrabenzyl titanate, or any mixed titanate thereof, or any hydrolysate thereof.

The titanium compound used here is also preferably, for example, titanium (oxy)acetylacetonate, titanium tetraacetylacetonate, titanium (diisopropoxide)acetylacetonate, titanium bis(ammonium lactate)dihydroxide, titanium bis(ethylacetoacetate)diisopropoxide, titanium (triethanolaminate)isopropoxide, polyhydroxytitanium stearate, titanium lactate, titanium triethanolaminate, or a butyl titanate dimer.

The titanium compound used here may be a liquid product obtained by mixing an alcohol, a Group 2 metal compound in the long form Periodic Table (Nomenclature of Inorganic Chemistry IUPAC Recommendations 2005) (hereinafter, sometimes referred to as "Group 2 metal compound in the long form Periodic Table"), a phosphate ester compound, or a titanium compound.

Among the above compounds, preferred is tetra-n-propyl titanate, tetraisopropyl titanate, tetra-n-butyl titanate, titanium (oxy)acetylacetonate, titanium tetraacetylacetonate, titanium bis(ammonium lactate)dihydroxide, polyhydroxytitanium stearate, titanium lactate, a butyl titanate dimer, or a liquid product obtained by mixing an alcohol, a Group 2 metal compound in the long form Periodic Table, a phosphate ester compound and/or the titanium compound, more preferred is tetra-n-butyl titanate, titanium (oxy)acetylacetonate, titanium tetraacetylacetonate, polyhydroxytitanium stearate, titanium lactate, a butyl titanate dimer, or a liquid product obtained by mixing an alcohol, a Group 2 metal compound in the long form Periodic Table, a phosphate ester compound, and/or the titanium compound, and in particular, preferred is tetra-n-butyl titanate, polyhydroxytitanium stearate, titanium (oxy)acetylacetonate, titanium tetraacetylacetonate, or a liquid product obtained by mixing an alcohol, a Group 2 metal compound in the long form Periodic Table, a phosphate ester compound, and/or a titanium compound.

Specific examples of the zirconium compound include zirconium tetraacetate, zirconium acetate hydroxide, zirconium tris(butoxy)stearate, zirconyl diacetate, zirconium oxalate, zirconyl oxalate, zirconium potassium oxalate, polyhydroxyzirconium stearate, zirconium ethoxide, zirconium tetra-n-propoxide, zirconium tetraisopropoxide, zirconium tetra-n-butoxide, zirconium tetra-t-butoxide, or zirconium tributoxyacetylacetonate, or any mixture thereof.

In particular, preferred is zirconyl diacetate, zirconium tris(butoxy)stearate, zirconium tetraacetate, zirconium acetate hydroxide, zirconium ammonium oxalate, zirconium potassium oxalate, polyhydroxyzirconium stearate, zirconium tetra-n-propoxide, zirconium tetraisopropoxide, zirconium tetra-n-butoxide, or zirconium tetra-t-butoxide, more preferred is zirconyl diacetate, zirconium tetraacetate, zirconium acetate hydroxide, zirconium tris (butoxy) stearate, zirconium ammonium oxalate, zirconium tetra-n-propoxide, or zirconium tetra-n-butoxide, and in particular, zirconium tris(butoxy)stearate is preferred because a polyester which is less colored and has a high degree of polymerization is easily obtained.

Specific examples of the germanium compound include an inorganic germanium compound such as germanium oxide or germanium chloride, or an organogermanium compound such as tetraalkoxygermanium. Preferred is germanium oxide, tetraethoxygermanium, or tetrabutoxygermanium, and in particular, germanium oxide is preferred in terms of price, availability, or the like.

Examples of the iron compound include an inorganic chloride such as ferric chloride, an inorganic oxide such as triiron tetraoxide, or an organoiron complex such as ferrocene. In particular, an inorganic oxide is preferred.

Examples of the other metal-containing compound include a scandium compound such as scandium carbonate, scandium acetate, scandium chloride, or scandium acetylacetonate, an yttrium compound such as yttrium carbonate, yttrium chloride, yttrium acetate, or yttrium acetylacetonate, a vanadium compound such as vanadium chloride, vanadium trichloride oxide, vanadium acetylacetonate, or vanadium acetylacetonate oxide, a molybdenum compound such as molybdenum chloride or molybdenum acetate, a tungsten compound such as tungsten chloride, tungsten acetate, or tungsten acid, or a lanthanoid compound such as cerium chloride, samarium chloride, or ytterbium chloride.

The amount of the polycondensation catalyst added is not particularly limited, and the lower limit value of the amount of metal with respect to the resulting polyester is usually 0.1 ppm by mass or more, preferably 0.5 ppm by mass or more, more preferably 1 ppm by mass or more, and the upper limit value thereof is usually 3000 ppm by mass or less, preferably 1000 ppm by mass or less, more preferably 250 ppm by mass or less, particularly preferably 130 ppm by mass or less. This range can be particularly preferably applied in the case of use of the metal compound as the polycondensation catalyst. A too large amount of the catalyst used is not only economically disadvantageous, but also sometimes increases the carboxyl group terminal concentration in a polyester-based resin, and therefore sometimes increases the amount of a carboxyl group terminal and the concentration of the remaining catalyst to result in reductions in heat stability and hydrolysis resistance of polyester. On the contrary, a too small amount thereof decreases the polymerization activity and accordingly induces pyrolysis of polyester during polyester production and hardly provides a polyester exhibiting useful physical properties for practical use.

The point of addition of the catalyst to the reaction system is not particularly limited as long as such addition is performed before a polycondensation reaction step, and the catalyst may be added during raw material loading, but is preferably added after an esterification reaction step because, if the catalyst co-exists under a state where water is much present or generated, the catalyst is sometimes deactivated to cause precipitation of foreign materials and thus impair the quality of a product.

(Reaction tank)

An esterification reaction tank in which the esterification reaction treatment is performed can be any known tank, may be any model of a vertical agitation complete mixing tank, a vertical thermal convection-type mixing tank, a tower-type continuous reaction tank, or the like, and may be in the form of a single tank or plural tanks obtained by placing the same type or different types of tanks in series. In particular, preferred is a reaction tank having a stirring apparatus, and the stirring apparatus used here can be an apparatus of any type of not only an ordinary type with a power section, a bearing, a shaft, and a stirring blade, but also a high-speed rotation type, for example, a turbine-stator type high-speed rotating stirrer, a disk mill type stirrer, or a rotor mill type stirrer.

The stirring mode is also not limited, and there can also be adopted not only a common stirring method including directly stirring a reaction liquid in a reaction tank from the upper section, the lower section, the side section, and the like of the reaction tank, but also a method including bringing part of a reaction liquid outside a reaction tank by using a pipe arrangement or the like, and stirring it with a line mixer, to circulate the reaction liquid. The type of the stirring blade can be selected from known blades, and specific examples include a propeller blade, a screw blade, a turbine blade, a fan turbine blade, a disk turbine blade, a Faudler blade, a full zone blade, or a Maxblend blade.

The model of the polycondensation reaction tank is not particularly limited, and examples can include a vertical agitation polymerization tank, a horizontal agitation polymerization tank, or a thin-film evaporation type polymerization tank. The polycondensation reaction tank can be in the form of one tank or plural tanks obtained by placing the same type or different types of tanks in series, and a horizontal agitation polymerization machine having excellent interfacial renewing properties, plug flow properties, or self-cleaning properties and having a thin-film evaporation function is preferably selected in the later stage of polycondensation, in which the viscosity of a reaction liquid is increased.

<Inorganic filler>

The biodegradable resin composition preferably further includes an inorganic filler. The inorganic filler can be included not only to increase rigidity of a molded body, but also to allow the effect of an anti-blocking agent to be expected in forming a film. The effect of promoting disintegration of a molded body in the soil or in the seawater is exerted when such a molded body is treated after use.

Examples of the shape of the inorganic filler include, for example, a fibrous, particulate, plate-like or needle-like shape, and in particular, a particulate or plate-like shape is preferred. Examples of such particulate ones include mineral particles such as talc, zeolite, diatomaceous earth, kaolin, clay, silica, or quartz powder; metal carbonate particles such as calcium carbonate, magnesium carbonate, or heavy calcium carbonate; metal silicate particles such as calcium silicate, aluminum silicate, or magnesium silicate; metal oxide particles such as alumina, silica, zinc oxide, or titanium oxide; metal hydroxide particles such as aluminum hydroxide, calcium hydroxide, or magnesium hydroxide; metal sulfate particles such as barium sulfate or calcium sulfate; or carbon particles such as carbon black. Examples of such plate-like ones include mica.

The inorganic filler used here can be preferably talc, calcium carbonate, silica, titanium oxide, barium sulfate, or the like, and is more preferably talc, calcium carbonate, or silica, particularly preferably calcium carbonate from attention to the environment after biodegradation.

The particle size of the inorganic filler used is not particularly limited, and may be, for example, 0.001 to 30 $\mu$m,

0.01 to 10 $\mu$m, 0.1 to 5 $\mu$m, or 0.1 to 3 $\mu$m.

In a case where a needle-like inorganic filler is used, the upper limit of the aspect ratio is usually 1000 or less, preferably 500 or less, further preferably 100 or less, and the lower limit thereof is usually 1 or more, preferably 10 or more, further preferably 15 or more. If the aspect ratio is too small, there is a tendency not to exhibit physical properties expected, such as rigidity and heat resistance, and if the aspect ratio is too large, there is a tendency to cause a poor appearance or deteriorate the film's physical properties. The aspect ratio mentioned here is the ratio between the longer diameter and the shorter diameter of the inorganic filler. The aspect ratio of particles is determined as the arithmetic average value of the ratios between the longest diameters and the shortest diameters of at least 10 or more particles observed in a field of view of 100 $\mu$m $\times$ 100 $\mu$m in a scanning electron micrograph.

The method for measuring the volume average particle size is not particularly limited, and the volume average particle size can be measured by subjecting particles dispersed in a dispersion medium, to a sedimentation method, laser scattering analysis, or a laser Doppler method. In the present invention, the volume average particle size is a value measured based on the sedimentation rate of particles (Stokes' law) with a centrifugal sedimentation type particle size distribution measuring device SA-CP4L manufactured by Shimadzu Corporation or a particle size distribution automatic measuring device RS-1000 manufactured by Shimadzu Corporation.

The specific surface area value of the inorganic filler used is not particularly limited, and a too large specific surface area value tends to result in an insufficient enhancement in rigidity, and a too small specific surface area value tends to result in a reduction in transparency. The specific surface area value of the inorganic filler used is usually 8000 $cm^2$/g or more, preferably 10000 $cm^2$/g or more, and usually 50000 $cm^2$/g or less, preferably 40000 $cm^2$/g or less.

The hardness of the inorganic filler used here is not particularly limited, and if the hardness is too low, there is a tendency to deteriorate physical properties such as rigidity and heat resistance, and if the hardness is too high, there is a tendency to cause a poor appearance and deterioration of physical properties such as film strength. The upper limit of the hardness (Mohs hardness) of the filler used is usually 9 or less, preferably 8 or less, more preferably 7 or less, and the lower limit thereof is usually 1 or more, preferably 2 or more, more preferably 3 or more. The Mohs hardness mentioned here refers to a value determined by scratching a standard substance with a sample substance and measuring the hardness based on the presence or absence of scratching.

The standard substance is as follows.

hardness 1: talcum; hardness 2: gypsum; hardness 3: calcite; hardness 4: fluorite; hardness 5: apatite; hardness 6: orthoclase; hardness 7: pebble; hardness 8: topaz; hardness 9: corundum; hardness 10: diamond

It is possible to use an inorganic filler that is surface-treated may be used, and in this case, it may result in an enhancement in dispersibility of the inorganic filler, an enhancement in fluidity of the resin composition, an enhancement in smoothness of a film formed, and/or an enhancement in openability. Furthermore, it can be expected that such a surface treatment brings about a reduction in the required amount of additive(s), for example, the inorganic filler and/or the plasticizer compounded in the resin composition. The surface treatment of the inorganic filler can be performed by a commonly known method, and the method for the surface treatment is not particularly limited.

Examples of the surface treatment agent include linear fatty acid or branched fatty acid having 6 to 40 carbon atoms, or any ester compound thereof.

Only one of these inorganic fillers may be used, or different two or more thereof in terms of material, physical properties, the presence or absence of a surface treatment, or the like may be mixed and used.

In a case where the biodegradable resin composition includes the inorganic filler, the content of the inorganic filler in the biodegradable resin composition is preferably 0.01% by mass or more, more preferably 0.1% by mass or more, further preferably 1% by mass or more, and preferably 70% by mass or less, more preferably 50% by mass or less, further preferably 30% by mass or less. In a case where the content of the inorganic filler is equal to or more than the above lower limit, the effect of the inorganic filler can be sufficiently obtained, and in a case where the content is equal to or less than the above upper limit, deterioration of physical properties due to poor dispersion of the inorganic filler can be prevented.

[Calcium carbonate]

As described above, calcium carbonate is particularly preferably used as the inorganic filler. The calcium carbonate used here may be calcium carbonate containing a zinc element or calcium carbonate not containing a zinc element.

The biodegradable resin composition preferably includes calcium carbonate containing a zinc element. In a case where the biodegradable resin composition contains calcium carbonate containing a zinc element, carboxylic acid at a terminal of polyester interacts with the zinc element, leading to suppressing intramolecular acid hydrolysis due to carboxylic acid at the terminal, and at the same time promotion of crystallization of the biodegradable resin by the nucleation effect of the calcium carbonate, thereby providing a biodegradable resin composition excellent in heat stability and hydrolysis resistance.

The mode of the calcium carbonate is not particularly limited, and one known mode can be used, and, for example, light calcium carbonate or heavy calcium carbonate can be used. As described above, the biodegradable resin composition must contain a specified amount of a zinc element. In order to satisfy this requirement, the calcium carbonate used here is preferably one containing a zinc element, and is, for example, heavy calcium carbonate which is produced by physically grinding-classifying limestone and which contains a zinc element. The presence or absence of a zinc element contained in the heavy calcium carbonate, and the amount thereof contained, are varied depending on the origin and/or the grade of limestone as a raw material, and therefore it is preferable to select the heavy calcium carbonate made from limestone of a specific origin and grade as appropriate.

Such heavy calcium carbonate containing a zinc element usually contains, in addition to a zinc element, at least one element selected from the group consisting of magnesium, aluminum, iron, silicon, phosphorus, strontium, sulfur, barium, chromium, copper, potassium, manganese, and sodium, and therefore in a case where such heavy calcium carbonate containing a zinc element is used as the calcium carbonate, a polyester-based resin composition contains the above-mentioned element(s). On the other hand, light calcium carbonate does not usually contain a zinc element and the above-mentioned elements.

In a case where the calcium carbonate is used as the inorganic filler, the content of the calcium carbonate in the biodegradable resin composition is not particularly limited, and is usually 0.01% by mass or more, preferably 0.1% by mass or more, more preferably 1% by mass or more, further preferably 5% by mass or more, and usually 70% by mass or less, preferably 50% by mass or less, more preferably 30% by mass or less, particularly preferably 25% by mass or less.

In a case where the content is equal to or more than the lower limit of the above range, a resin composition excellent in heat stability and hydrolysis resistance is obtained. In a case where the content is equal to or less than the upper limit of the above range, a resin composition excellent in moldability and mechanical properties is obtained.

In a case where the calcium carbonate containing a zinc element is used as the calcium carbonate, the content of the zinc element in the calcium carbonate is not particularly limited, and is preferably 0.01 ppm by mass or more, more preferably 0.1 ppm by mass or more, particularly preferably 1 ppm by mass or more, and preferably 10,000 ppm by mass or less, more preferably 500 ppm by mass or less, further preferably 100 ppm by mass or less, particularly preferably 50 ppm by mass or less.

In a case where the content is equal to or more than the lower limit of the above range, a resin composition excellent in heat stability and hydrolysis resistance is obtained. In a case where the content is equal to or less than the upper limit of the above range, coloration and promotion of hydrolysis of polyester due to the Lewis acidity of zinc hardly occur.

[Other components]

The biodegradable resin composition may include any other component than the above biodegradable resin (A), zinc element, and inorganic filler, and examples include polyester other than the biodegradable resin (A), a resin other than the polyester, a carbodiimide compound, a filling material other than the inorganic filler, or a plasticizer. In particular, in a case where any other resin than the biodegradable resin (A) is included, the resin used here is preferably a biodegradable resin, for example, polycaprolactone, polyamide, polyvinyl alcohol, or cellulose ester, or animal/plant substance fine powder such as starch, cellulose, paper, wood powder, a chitin/chitosan substance, coconut powder, or walnut shell powder, or any mixture thereof can be compounded. In order to adjust physical properties or processability of a molded body, an additive such as a heat stabilizer, a plasticizer, a lubricant, an anti-blocking agent, a nucleating agent, a colorant, a pigment, an ultraviolet absorber, or a light stabilizer, a modifier, a crosslinking agent, or the like may be contained.

<Characteristics of biodegradable resin composition>

[Melt flow rate (MFR)]

The melt flow rate (MFR) of the biodegradable resin composition is preferably 0.5 to 30 g/10 min in terms of the value measured at 190°C with a load of 2.16 kg based on JIS K7210 (2014). The MFR is more preferably 1.0 to 10 g/10 min, still more preferably 2.0 to 6.0 g/10 min in a film application or an extrusion molding application. In a case where the MFR is equal to or more than the above lower limit, fluidity necessary for molding is obtained, and in a case where the MFR is equal to or less than the above upper limit, a resin excellent in bubble stability during film formation is obtained. On the other hand, the MFR is more preferably 3.0 to 30 g/10 min, still more preferably 5.0 to 30 g/10 min in an injection molding application or a fiber application. In a case where the MFR is equal to or more than the above lower limit, fluidity necessary for molding is obtained, and in a case where the MFR is equal to or less than the above upper limit, a resin excellent in mechanical properties, for example, impact strength of an injection-molded article, is obtained.

<Method for producing biodegradable resin composition>

A known procedure can be applied as the method for producing the biodegradable resin composition. Examples of the method for producing the biodegradable resin composition include a method including a step of mixing the biodegradable resin (A) with a single zinc element or a component containing a zinc element (a zinc salt, calcium carbonate powder containing a zinc element, or the like), and collectively melting and mixing the biodegradable resin (A) with a single zinc element or the component containing a zinc element, or a method including charging them from respective separate feeders to a kneader to mix them. In a case where a zinc salt is used as the component containing a zinc element, the zinc salt may be added in the form of powder, or may be added in the form of being dispersed or dissolved in water, a solvent, oil, or the like in advance. The zinc concentration can also be adjusted by kneading a zinc salt and the biodegradable resin (A) by an extruder in advance so that 10 ppm by mass to 30% by mass of the zinc salt is contained, and diluting the kneaded product as a masterbatch with the biodegradable resin (A), to knead the resultant. In a case where calcium carbonate powder containing a zinc element is used as the component containing a zinc element, the calcium carbonate concentration and the zinc concentration in the resin composition can also be adjusted by adjusting the biodegradable resin (A) and the calcium carbonate containing a zinc element in advance so that a calcium carbonate masterbatch having a high concentration of 50% by mass or more is obtained, and diluting the masterbatch with the biodegradable resin (A) again and kneading the resultant. The extruder used here can be a single-screw or double-screw extruder. The resin kneaded by the double-screw extruder can be pelletized by a pelletizer or an underwater cutter, and the pellet can be used in various subsequent molding processes. The pellet of the biodegradable resin (A) and a single zinc element or the component containing a zinc element, and any other raw material pellet can be directly fed to a molding machine, to prepare a resin composition and at the same time provide a molded body in the form of a film or the like.

<Molded body>

A molded body according to another embodiment of the present invention is a molded body of the above-described biodegradable resin composition. The method for producing the molded body is not particularly limited, and the molded body can be obtained by molding according to a known polyester molding method. The molding method is not particularly limited, and a known method such as compression molding, laminate molding, injection molding, extrusion molding, vacuum molding, compressed air molding, blow molding, inflation molding, or stretch molding can be used. More specific examples include a method including cooling and solidifying a film-like, sheet-like, or cylindrical product extruded at a predetermined thickness from a T-die, an I-die, a round die, or the like, by a cooling roll, water, compressed air, or the like.

The application of the molded body is not limited, and the molded body can be specifically utilized in, for example, films for foods, fresh-food trays, fast-food containers, outdoor leisure products, fishing lines, fishing nets, vegetation nets, water retention sheets, coating materials, agricultural mulch films, coating materials for fertilizers, seeding beds, plant pots, striated tapes, split yarns, composite fibers, shopping bags, zippers, shrink films, fruit and vegetable bags, shopping bags, garbage bags, compost bags, cosmetic containers, detergent containers, bleach containers, ropes, tying materials, operation threads, sanitary cover stock materials, cold reserving boxes, cushion materials, and synthetic paper.

EXAMPLES

Hereinafter, specific embodiments of the present invention are described in further detail with reference to Examples, but the present invention is not limited to the following Examples without departing from the gist thereof. Herein, values of various production conditions and evaluation results in the following Examples have the meanings as preferred values of upper limits or lower limits in embodiments of the present invention, and a preferred range thereof may be a range defined by a combination of any upper limit or lower limit described above and any value in the following Examples, or a combination of values in such Examples.

<Production Example 1: production of biodegradable resin (A-1)>

[Preparation of catalyst for polycondensation]

A reaction container equipped with a stirring apparatus was charged with 343.5 parts by mass of magnesium acetate-tetrahydrate, and 1434 parts by mass of anhydrous ethanol (purity 99% by mass or more) was further added thereto. Furthermore, 218.3 parts by mass of ethyl acid phosphate (the mixing weight ratio of a mono-ester form and a diester form was 45:55) was added, and stirred at 23°C. After magnesium acetate was confirmed to be completely dissolved, 410.0 parts by mass of tetra-n-butyl titanate was added. Stirring was further continued for 10 minutes, to obtain a uniform mixed solution. This mixed solution was controlled at a temperature of 60°C or less, and concentrated under reduced pressure. About half the amount of ethanol, with respect to the amount of ethanol added, was distilled off, and a translucent viscous liquid remained. Thereto was added 1108 parts by mass of 1,4-butanediol, and the resultant was controlled at a temperature of 80°C or less and furthermore concentrated under reduced pressure, to obtain a catalyst solution having a titanium atom content of 3.5% by mass.

[Formation of biodegradable resin (A-1) by polymerization]

A reaction vessel equipped with a stirring apparatus, a nitrogen introduction port, a heating apparatus, a thermometer, and an evacuation port was loaded, as raw materials, with 33.6 parts by mass of succinic acid, 38.6 parts by mass of terephthalic acid, 69.7 parts by mass of 1,4-butanediol (petrochemical product manufactured by Dairen Chemical Corporation), and 0.138 parts by mass of trimethylolpropane (0.200% by mol based on 100% by mol in total of succinic acid and terephthalic acid), 0.10 parts by mass of polyethylene wax ("ACumistB6" manufactured by Honeywell, melting point: 124°C), and 0.0017 parts by mass of sodium hydroxide (NaOH), and furthermore tetra-n-butyl titanate was added so as to be at 30 ppm by mass in terms of titanium atom per the resulting polyester resin. A nitrogen gas was introduced into the vessel under stirring of the content of the vessel, to allow the interior of the system to be under a nitrogen atmosphere by replacement under reduced pressure. Next, the temperature was raised from 160°C to 230°C over 1 hour under stirring of the interior of the system, and a reaction was performed at that temperature for 3 hours. The acid value at a terminal of the resulting ester oligomer was measured and confirmed to be 90 equivalents/ton.

To the ester oligomer, the catalyst solution was added so that an amount thereof is 70 ppm by mass in terms of titanium atom per the resulting polyester resin, the resultant was heated to 250°C over 45 minutes and at the same time depressurized to $0.07 \times 10^3$ Pa or less over one hour and 20 minutes, polycondensation was continued with retention of a heated and depressurized state, polymerization was terminated when a predetermined viscosity was achieved, and thus a polyester-copolymerized product (biodegradable resin (A-1)) was obtained.

The melting point, the crystallization temperature, and the glass transition temperature of the biodegradable resin (A-1) produced were measured with a differential scanning calorimeter (product name: DSC220 manufactured by Seiko Future Creation Inc.). Specifically, after about 5 mg of a sample was precisely weighed and melted by heating under a nitrogen stream at a flow rate of 40 mL/min, the crystallization exothermic peak temperature during cooling at a rate of 10°C/min was defined as Tc, and subsequently the temperature at baseline shifting during a temperature rise at a rate of 10°C/min was defined as the glass transition temperature and subsequently the endothermic peak temperature at crystal melting, as observed during a temperature rise at a rate of 10°C/min, was defined as the melting point.

The biodegradable resin (A-1) subjected to measurement as described above had a melting point of 110°C, a glass transition temperature of -20°C, and a crystallization peak temperature (Tc (A)) of 60°C.

The biodegradable resin (A-1) had a weight average molecular weight (Mw) of 117,000, as measured by gel permeation chromatography (GPC) with monodisperse polystyrene as a standard substance, and had an MFR of 4.5 g/10 min, as measured at 190°C with a load of 2.16 Kg with a melt indexer based on JIS K7210

(2014).

The mole fraction of each of the constituent units was determined from the ratio of integral values of chemical shifts assigned to the constituent units in $^1$H-NMR measurement with NMR "AVANCE 400" manufactured by Bruker, and thus the ratio between the succinic acid unit and the terephthalic acid unit in the biodegradable resin (A-1) was confirmed to be 55:45 based on the ratio between the values of integral at 2.63 ppm and 8.10 ppm.

The bio-based content in the biodegradable resin (A-1) was 22%.

<Production Example 2: production of biodegradable resin (A-2)>

A biodegradable resin (A-2) was produced by the same method as in Production Example 1 except that 1,4-butanediol (plant-derived raw material manufactured by Novamont S.p.A.) was used instead of 1,4-butanediol (petrochemical product manufactured by Dairen Chemical Corporation). The biodegradable resin (A-2) produced had a melting point of 110°C, a glass transition temperature of -20°C, and a crystallization peak temperature (Tc (A)) of 60°C. The weight average molecular weight (Mw) was 117,000, and the MFR was 4.5 g/10 min. The ratio between the succinic acid unit and the terephthalic acid unit was confirmed to be 55:45 based on the ratio between the values of integral at 2.63 ppm and 8.10 ppm.

The bio-based content in the biodegradable resin (A-2) was 63%.

<Other materials>

- Biodegradable resin (A-3): polybutylene adipate/terephthalate, trade name: Ecoflex (registered trademark) (manufactured by BASF SE, melting point: 120°C, Tc (B): 41°C, MFR: 3.5 g/10 min, Mw: 125,000, molar ratio between adipic acid unit and terephthalic acid unit = 53:47, bio-based content 0%)

- Biodegradable resin (A-4): polybutylene succinate: trade name: BioPBS (registered trademark) Model: FZ91PM (manufactured by PTT MCC Biochem Co., Ltd., melting point: 115°C, MFR 4.5 g/10 min, Mw = 160,000, bio-based content 50%)
- Biodegradable resin (A-5): polybutylene succinate/adipate: trade name: BioPBS (registered trademark) Model: FD92PB (manufactured by PTT MCC Biochem Co., Ltd., melting point: 86°C, MFR 4.5 g/10 min, Mw = 160,000, bio-based content 35%)
- Zinc acetate-dihydrate (FUJIFILM Wako Pure Chemical Corporation, purity 99.9%)
- Light calcium carbonate (zinc content 0.0 ppm, average particle size 2.0 $\mu$m)
- Heavy calcium carbonate (1) (zinc content 4.0 ppm, average particle size 1.8 $\mu$m)
- Heavy calcium carbonate (2) (zinc content 4.0 ppm, average particle size 1.0 $\mu$m)
- Heavy calcium carbonate (3) (zinc content 3.0 ppm, average particle size 1.0 $\mu$m)
- Heavy calcium carbonate (4) (zinc content 1.0 ppm, average particle size 2.0 $\mu$m)

<Measurement of content of zinc element in calcium carbonate>

The content of the zinc element in the calcium carbonate was determined by weighing the calcium carbonate and adding nitric acid to dissolve the calcium carbonate, then using pure water to provide a constant volume, and performing measurement with an ICP emission spectrometer (Agilent 5800 manufactured by Agilent Technologies) by a standard addition method.
It was also confirmed that all of heavy calcium carbonates (1) to (4) included at least one element selected from the group consisting of magnesium, aluminum, iron, silicon, phosphorus, strontium, sulfur, barium, chromium, copper, potassium, manganese, and sodium.

<Measurement of content of zinc element in resin composition>

The content of the zinc element in the resin composition was also measured with an ICP emission spectrometer (Agilent 5800 manufactured by Agilent Technologies) by a standard addition method, in the same manner as in the content of the zinc element in the calcium carbonate.

<Evaluation of heat stability of biodegradable resin composition (heat stability test)>

The pellet of the biodegradable resin composition obtained in each of Examples and Comparative Examples was evaluated in conditions obtained by optimizing those of JIS K7210 (2014). In other words, in the case of measurement at 190°C with a load of 2.16 kg with a melt indexer, the MFRs in the case of measurement at a preheating time of 5 minutes and the case of measurement at a preheating time of 6 minutes were respectively measured and the change rate was calculated.

<Evaluation of hydrolysis stability of biodegradable resin composition (hydrolysis test)>

The pellet of the biodegradable resin composition obtained in each of Examples and Comparative Examples was left to stand at 60°C and 70% RH for 72 hours, and the MFR was measured at 190°C with a load of 2.16 kg with a melt indexer at a preheating time of 5 minutes. The result was compared with the MFR measured at a preheating time of 5 minutes by the above method, and the change rate was calculated.

<Example 1>

A resin composition pellet was obtained by dry-blending 100% by mass of the biodegradable resin (A-1) described in Production Example 1, with 0.0337 parts by mass of zinc acetate-dihydrate and 0.05 parts by mass of Irganox 1010, kneading the dry-blended product at 150°C in a double-screw extruder, cooling an extruded strand with water, and then cutting the strand. The pellet obtained was used to evaluate heat stability by the above method. The MFR in pre-heating for 5 minutes was 5.8 g/10 min, and the MFR in pre-heating for 6 minutes was 5.8 g/10 min. The change rate calculated was 0%. Evaluation of hydrolysis stability was also carried out by the above method. The MFR after standing at 60°C and 70% RH for 72 hours was 7.5 g/10 min, and the change rate was 29.3%.

<Example 2>

A resin composition was obtained by the same method as in Example 1 except that the amount of zinc acetate-dihydrate was 0.0000336 parts by mass in Example 1. The resin composition was evaluated in the same manner. The MFR in pre-heating for 5 minutes was 5.9 g/10 min, and the MFR in pre-heating for 6 minutes was 6.0 g/10 min. The change rate calculated was 1.7%. The MFR after standing at 60°C and 70% RH for 72 hours was 7.2 g/10 min, and the change rate was 22.0%.

<Example 3>

A resin composition was obtained by the same method as in Example 1 except that the amount of zinc acetate-dihydrate was 0.00017 parts by mass in Example 1. The resin composition was evaluated in the same manner. The MFR in pre-heating for 5 minutes was 5.8 g/10 min, and the MFR in pre-heating for 6 minutes was 5.9 g/10 min. The rate of change calculated was 1.7%. The MFR after standing at 60°C and 70% RH for 72 hours was 7.1 g/10 min, and the change rate was 22.4%.

<Example 4>

A resin composition was obtained by the same method as in Example 1 except that the amount of zinc acetate-dihydrate was 0.00168 parts by mass in Example 1. The resin composition was evaluated in the same manner. The MFR in pre-heating for 5 minutes was 7.0 g/10 min, and the MFR in pre-heating for 6 minutes was 7.1 g/10 min. The change rate calculated was 1.4%. The MFR after standing at 60°C and 70% RH for 72 hours was 8.9 g/10 min, and the change rate was 27.1%.

<Example 5>

A resin composition was obtained by the same method as in Example 1 except that the amount of zinc acetate-dihydrate was 0.3367 parts by mass in Example 1. The resin composition was evaluated in the same manner. The MFR in pre-heating for 5 minutes was 7.2 g/10 min, and the MFR in pre-heating for 6 minutes was 7.3 g/10 min. The change rate calculated was 1.4%. The MFR after standing at 60°C and 70% RH for 72 hours was 8.8 g/10 min, and the change rate was 22.2%.

<Example 6>

A resin composition was obtained by the same method as in Example 1 except that the amount of zinc acetate-dihydrate was 1.6835 parts by mass in Example 1. The resin composition was evaluated in the same manner. The MFR in pre-heating for 5 minutes was 9.9 g/10 min, and the MFR in pre-heating for 6 minutes was 10.1 g/10 min. The change rate calculated was 2.0%. The MFR after standing at 60°C and 70% RH for 72 hours was 12.8 g/10 min, and the change rate was 29.3%.

<Example 7>

A resin composition was obtained by the same method as in Example 1 except that the biodegradable resin (A-2) produced in Production Example 2 was used instead of the biodegradable resin (A-1) and the amount of zinc acetate-dihydrate was 0.0168 parts by mass in Example 1. The resin composition was evaluated in the same manner. The MFR in pre-heating for 5 minutes was 5.7 g/10 min, and the MFR in pre-heating for 6 minutes was 5.8 g/10 min. The change rate calculated was 1.8%. The MFR after standing at 60°C and 70% RH for 72 hours was 7.1 g/10 min, and the change rate was 24.6%.

<Example 8>

A resin composition was obtained by the same method as in Example 7 except that biodegradable resin (A-4): BioPBS FZ91PM was used instead of the biodegradable resin (A-2) in Example 7. The resin composition was evaluated in the same manner. The MFR in pre-heating for 5 minutes was 5.1 g/10 min, and the MFR in pre-heating for 6 minutes was 5.1 g/10 min. The change rate calculated was 0%. The MFR after standing at 60°C and 70% RH for 72 hours was 6.4 g/10 min, and the change rate was 25.5%.

<Example 9>

A resin composition was obtained by the same method as in Example 7 except that biodegradable resin (A-5): BioPBS FD92PM was used instead of the biodegradable resin (A-2) in Example 7. The resin composition was evaluated in the same manner. The MFR in pre-heating for 5 minutes was 4.9 g/10 min, and the MFR in pre-heating for 6 minutes was 5.0 g/10 min. The change rate calculated was 2.0%. The MFR after standing at 60°C and 70% RH for 72 hours was 6.2 g/10 min, and the change rate was 26.5%.

<Example 10>

A resin composition pellet was obtained by dry-blending 90% by mass of biodegradable resin (A) described in Production Example 1, with 0.0168 parts by mass of zinc acetate-dihydrate and 0.05 parts by mass of Irganox 1010, then feeding the dry-blended product to a double-screw extruder by use of a feeder, feeding 10% by mass of light calcium carbonate by a separate feeder to the same double-screw extruder and kneading the resultant at 150°C, cooling an extruded strand with water, and then cutting the strand. The pellet obtained was used to evaluate heat stability by the above method. The MFR in pre-heating for 5 minutes was 6.2 g/10 min, and the MFR in pre-heating for 6 minutes was 6.2 g/10 min. The change rate calculated was 0%. Evaluation of hydrolysis stability was also carried out by the above method. The MFR after standing at 60°C and 70% RH for 72 hours was 7.6 g/10 min, and the change rate was 22.6%.

<Comparative Example 1>

A resin composition was obtained by the same method as in Example 1 except that zinc acetate-dihydrate was not added in Example 1. The resin composition was evaluated in the same manner. The MFR in pre-heating for 5 minutes was 7.2 g/10 min, and the MFR in pre-heating for 6 minutes was 7.4 g/10 min. The change rate calculated was 2.8%. The MFR after standing at 60°C and 70% RH for 72 hours was 9.5 g/10 min, and the change rate was 31.9%.

<Comparative Example 2>

A resin composition was obtained by the same method as in Example 7 except that zinc acetate-dihydrate was not added in Example 7. The resin composition was evaluated in the same manner. The MFR in pre-heating for 5 minutes was 5.7 g/10 min, and the MFR in pre-heating for 6 minutes was 6.0 g/10 min. The change rate calculated was 5.3%. The MFR after standing at 60°C and 70% RH for 72 hours was 8.0 g/10 min, and the change rate was 40.4%.

<Comparative Example 3>

A resin composition was obtained by the same method as in Example 8 except that zinc acetate-dihydrate was not added in Example 8. The resin composition was evaluated in the same manner. The MFR in pre-heating for 5 minutes was 4.9 g/10 min, and the MFR in pre-heating for 6 minutes was 5.2 g/10 min. The change rate calculated was 6.1%. The MFR after standing at 60°C and 70% RH for 72 hours was 6.4 g/10 min, and the change rate was 30.6%.

<Comparative Example 4>

A resin composition was obtained by the same method as in Example 9 except that zinc acetate-dihydrate was not added in Example 9. The resin composition was evaluated in the same manner. The MFR in pre-heating for 5 minutes was 5.0 g/10 min, and the MFR in pre-heating for 6 minutes was 5.3 g/10 min. The change rate calculated was 6.0%. The MFR after standing at 60°C and 70% RH for 72 hours was 6.7 g/10 min, and the change rate of change was 34.0%.

<Comparative Example 5>

A resin composition was obtained by the same method as in Example 10 except that zinc acetate-dihydrate was not added in Example 10. The resin composition was evaluated in the same manner. The MFR in pre-heating for 5 minutes was 6.4 g/10 min, and the MFR in pre-heating for 6 minutes was 6.7 g/10 min. The change rate calculated was 4.7%. The MFR after standing at 60°C and 70% RH for 72 hours was 8.8 g/10 min, and the change rate was 37.5%.

<Comparative Example 6>

A resin composition was obtained by the same method as in Example 1 except that the amount of zinc acetate-dihydrate was 3.3670 parts by mass in Example 1. The resin composition was evaluated in the same manner. The MFR in pre-heating for 5 minutes was 11.0 g/10 min, and the MFR in pre-heating for 6 minutes was 11.5 g/10 min. The change rate calculated was 4.5%. The MFR after standing at 60°C and 70% RH for 72 hours was 16.0 g/10 min, and the change rate was 45.5%.

[Table 1]

Table 1

| | | Unit | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 | Comparative Example 4 | Comparative Example 5 | Comparative Example 6 |
|---|---|---|---|---|---|---|---|---|---|---|---|---|---|---|---|---|---|---|
| Compounding | A-1) PBST (bio-based content 22%) | % by mass | 100 | 100 | 100 | 100 | 100 | 100 | | | | 90 | 100 | | | | 90 | 100 |
| | A-2) PBST (bio-based content 63%) | % by mass | | | | | | | 100 | | | | | 100 | | | | |
| | A-4) PBS (bio-based content 50%) | % by mass | | | | | | | | 100 | | | | | 100 | | | |
| | A-5) PBSA (bio-based content 35%) | % by mass | | | | | | | | | 100 | | | | | 100 | | |
| | Light calcium carbonate | % by mass | | | | | | | | | | 10 | | | | | 10 | |
| | Zinc acetate-dihydrate | ppm by mass | 337 | 0.336 | 1.7 | 16.8 | 3367 | 16835 | 168 | 168 | 168 | 168 | 0 | 0 | 0 | 0 | 0 | 33670 |
| Proportion of zinc element in resin composition | | ppm by mass | 100 | 0.1 | 0.5 | 5 | 1000 | 5000 | 50 | 50 | 50 | 50 | 0 | 0 | 0 | 0 | 0 | 10000 |
| Effects | MFR changing rate (heat stability test) | % | 0.0 | 1.7 | 1.7 | 1.4 | 1.4 | 2.0 | 1.8 | 0.0 | 2.0 | 0.0 | 2.8 | 5.3 | 6.1 | 6.0 | 4.7 | 4.5 |
| | MFR changing rate (hydrolysis test) | % | 29.3 | 22.0 | 22.4 | 27.1 | 22.2 | 29.3 | 24.6 | 25.5 | 26.5 | 22.6 | 31.9 | 40.4 | 30.6 | 34.0 | 37.5 | 45.5 |

As is clear from Table 1, it can be seen that, in a case where the resin composition includes a biodegradable resin (A) and a zinc element and the content of the zinc element is 5000 ppm or less, the resin composition is specifically excellent in heat stability and hydrolysis stability. On the other hand, in a case where the amount of zinc contained exceeds 10000 ppm, both heat stability and hydrolysis stability deteriorate.

<Example 11>

A resin composition pellet was obtained by dry-blending 80% by mass of the biodegradable resin (A-1) described in Production Example 1, with 20% by mass of calcium bicarbonate powder (1) having 4 ppm of a zinc element, and 0.05 parts by mass of Irganox 1010, kneading the dry-blended product at 150°C in a double-screw extruder, cooling an extruded strand with water, and then cutting the strand. The content of the aliphatic dicarboxylic acid unit was 27.5% by mol and the content of the aromatic dicarboxylic acid unit was 22.5% by mol based on 100% by mol of all the constituent units forming the biodegradable resin (A). The pellet obtained was used to evaluate heat resistance by the above method. The MFR in pre-heating for 5 minutes was 3.2 g/10 min, and the MFR in pre-heating for 6 minutes was 3.2 g/10 min. The change rate calculated was 0%. Evaluation of hydrolyzability was also carried out according to the above method. The MFR after standing at 60°C and 70% RH for 72 hours was 4.0 g/10 min, and the change rate was 25%.

<Example 12>

A resin composition was produced by the same method and evaluated in the same manner as in Example 11 except that the biodegradable resin (A-2) produced in Production Example 2 was used instead of the biodegradable resin (A-1) in Example 11. The content of the aliphatic dicarboxylic acid unit was 27.5% by mol and the content of the aromatic dicarboxylic acid unit was 22.5% by mol based on 100% by mol of all the constituent units forming the biodegradable resin (A). The MFR in pre-heating for 5 minutes was 3.4 g/10 min, and the MFR in pre-heating for 6 minutes was 3.4 g/10 min. The change rate calculated was 0%. The MFR after standing at 60°C and 70% RH for 72 hours was 4.3 g/10 min, and the change rate was 26.5%.

<Example 13>

A resin composition was produced by the same method and evaluated in the same manner as in Example 11 except that 91% by mass of biodegradable resin (A-3): polybutylene/adipate terephthalate, trade name: Ecoflex (registered trademark) was used instead of the biodegradable resin (A-1) and 9% by mass of calcium bicarbonate powder (1) containing 4.0 ppm of a zinc element was used in Example 11. The content of the aliphatic dicarboxylic acid unit was 26.5% by mol and the content of the aromatic dicarboxylic acid unit was 23.5% by mol based on 100% by mol of all the constituent units forming the biodegradable resin (A). The MFR in pre-heating for 5 minutes was 3.6 g/10 min, and the MFR in pre-heating for 6 minutes was 3.7 g/10 min. The change rate calculated was 2.8. The MFR after standing at 60°C and 70% RH for 72 hours was 4.5 g/10 min, and the change rate was 25%.

<Example 14>

A resin composition was produced by the same method and evaluated in the same manner as in Example 11 except that 95% by mass of biodegradable resin (A-4): polybutylene succinate: trade name: BioPBS (registered trademark) Model: FZ91PM was used instead of the biodegradable resin (A-1) and 5% by mass of calcium bicarbonate powder (1) containing 4.0 ppm of a zinc element was used in Example 11. The content of the aliphatic dicarboxylic acid unit was 25% by mol based on 100% by mol of all the constituent units forming the biodegradable resin (A). The MFR in pre-heating for 5 minutes was 4.2 g/10 min, and the MFR in pre-heating for 6 minutes was 4.3 g/10 min. The change rate calculated was 2.4%. The MFR after standing at 60°C and 70% RH for 72 hours was 5.2 g/10 min, and the change rate was 23.8%.

<Example 15>

A resin composition was produced by the same method and evaluated in the same manner as in Example 11 except that 70% by mass of biodegradable resin (A-5): polybutylene succinate/adipate: trade name: BioPBS (registered trademark), Model: FD92PB was used instead of the biodegradable resin (A-1) and 30% by mass of calcium bicarbonate powder (1) containing 4.0 ppm of a zinc element was used in Example 11. The content of the aliphatic dicarboxylic acid unit was 25% by mol based on 100% by mol of all the constituent units forming the biodegradable resin (A). The MFR in pre-heating for 5 minutes was 2.2 g/10 min, and the MFR in pre-heating for 6 minutes was 2.2 g/10 min. The change rate calculated was 0%. The MFR after standing at 60°C and 70% RH for 72 hours was 2.8 g/10 min, and the change rate was 27.3%.

<Example 16>

A resin composition was produced by the same method and evaluated in the same manner as in Example 12 except that calcium bicarbonate powder (2) containing 4.0 ppm of a zinc element and having a particle size of 1.0 micrometer was used instead of calcium bicarbonate powder (1) in Example 12. The content of the aliphatic dicarboxylic acid unit was 27.5% by mol, and the content of the aromatic dicarboxylic acid unit was 22.5% by mol based on 100% by mol of all the constituent units forming the biodegradable resin (A). The MFR in pre-heating for 5 minutes was 3.2 g/10 min, and the MFR in pre-heating for 6 minutes was 3.2 g/10 min. The change rate calculated was 0%. The MFR after standing at 60°C and 70% RH for 72 hours was 4.1 g/10 min, and the change rate was 28.1%.

<Example 17>

A resin composition was produced by the same method and evaluated in the same manner as in Example 12 except that calcium bicarbonate powder (3) containing 3.0 ppm of a zinc element was used instead of calcium bicarbonate powder (1) in Example 12. The content of the aliphatic dicarboxylic acid unit was 27.5% by mol, and the content of the aromatic dicarboxylic acid unit was 22.5% by mol based on 100% by mol of all the constituent units forming the biodegradable resin (A). The MFR in pre-heating for 5 minutes was 3.0 g/10 min, and the MFR in pre-heating for 6 minutes was 3.0 g/10 min. The change rate calculated was 0%. The MFR after standing at 60°C and 70% RH for 72 hours was 3.8 g/10 min, and the change rate was 26.7%.

<Example 18>

A resin composition was produced by the same method and evaluated in the same manner as in Example 12 except that calcium bicarbonate powder (4) containing 1.0 ppm of a zinc element was used instead of calcium bicarbonate powder (1) in Example 12. The content of the aliphatic dicarboxylic acid unit was 27.5% by mol and the content of the aromatic dicarboxylic acid unit was 22.5% by mol based on 100% by mol of all the constituent units forming the biodegradable resin (A). The MFR in pre-heating for 5 minutes was 2.8 g/10 min, and the MFR in pre-heating for 6 minutes was 2.8 g/10 min. The change rate calculated was 0%. The MFR after standing at 60°C and 70% RH for 72 hours was 3.5 g/10 min, and the change rate was 25.0%.

<Comparative Example 7>

A resin composition was produced by the same method and evaluated in the same manner as in Example 11 except that light calcium carbonate powder was used in Example 11. The content of the aliphatic dicarboxylic acid unit was 27.5% by mol, and the content of the aromatic dicarboxylic acid unit was 22.5% by mol based on 100% by mol of all the constituent units forming the biodegradable resin (A). The MFR in pre-heating for 5 minutes was 3.3 g/10 min, and the MFR in pre-heating for 6 minutes was 3.5 g/10 min. The change rate calculated was 6.1%. The MFR after standing at 60°C and 70% RH for 72 hours was 4.5 g/10 min, and the change rate was 36.4%.

<Comparative Example 8>

A resin composition was produced by the same method and evaluated in the same manner as in Example 12 except that light calcium carbonate powder was used in Example 12. The content of the aliphatic dicarboxylic acid unit was 27.5% by mol, and the content of the aromatic dicarboxylic acid unit was 22.5% by mol based on 100% by mol of all the constituent units forming the biodegradable resin (A). The MFR in pre-heating for 5 minutes was 3.5 g/10 min, and the MFR in pre-heating for 6 minutes was 3.8 g/10 min. The change rate calculated was 8.6%. The MFR after standing at 60°C and 70% RH for 72 hours was 4.6 g/10 min, and the change rate was 31.4%.

<Comparative Example 9>

A resin composition was produced by the same method and evaluated in the same manner as in Example 13, except that light calcium carbonate powder was used in Example 13. The content of the aliphatic dicarboxylic acid unit was 26.5% by mol, and the content of the aromatic dicarboxylic acid unit was 23.5% by mol based on 100% by mol of all the constituent units forming the biodegradable resin (A). The MFR in pre-heating for 5 minutes was 3.6 g/10 min, and the MFR in pre-heating for 6 minutes was 3.8 g/10 min. The change rate calculated was 5.6%. The MFR after standing at 60°C and 70% RH for 72 hours was 4.9 g/10 min, and the change rate was 36.1%.

<Comparative Example 10>

A resin composition was produced by the same method and evaluated in the same manner as in Example 14 except that light calcium carbonate powder was used in Example 14. The content of the aliphatic dicarboxylic acid unit was 25% by mol based on 100% by mol of all the constituent units forming the biodegradable resin (A). The MFR in pre-heating for 5 minutes was 4.4 g/10 min, and the MFR in pre-heating for 6 minutes was 4.7 g/10 min. The change rate calculated was 6.8%. The MFR after standing at 60°C and 70% RH for 72 hours was 6.0 g/10 min, and the change rate was 36.4%.

<Comparative Example 11>

A resin composition was produced by the same method and evaluated in the same manner as in Example 15 except that light calcium carbonate powder was used in Example 15. The content of the aliphatic dicarboxylic acid unit was 25% by mol based on 100% by mol of all the constituent units forming the biodegradable resin (A). The MFR in pre-heating for 5 minutes was 2.6 g/10 min, and the MFR in pre-heating for 6 minutes was 2.9 g/10 min. The change rate calculated was 11.5%. The MFR after standing at 60°C and 70% RH for 72 hours was 3.5 g/10 min, and the change rate was 34.6%.

[Table 2]

Table 2

| | Unit | Example 11 | Example 12 | Example 13 | Example 14 | Example 15 | Example 16 | Example 17 | Example 18 | Comparative Example 7 | Comparative Example 8 | Comparative Example 9 | Comparative Example 10 | Comparative Example 11 |
|---|---|---|---|---|---|---|---|---|---|---|---|---|---|---|
| **Compounding** A-1) PBST (bio-based content 22%) | % by mass | 80 | | | | | | | | 80 | | | | |
| A-2) PBST (bio-based content 63%) | % by mass | | 80 | | | | 80 | 80 | 80 | | 80 | | | |
| A-3) PBAT (bio-based content 0%) | % by mass | | | 91 | | | | | | | | 91 | | |
| A-4) PBS (bio-based content 50%) | % by mass | | | | 95 | | | | | | | | 95 | |
| A-5) PBSA (bio-based content 35%) | % by mass | | | | | 70 | | | | | | | | 70 |
| Heavy calcium carbonate (1) | % by mass | 20 | 20 | 9 | 5 | 30 | | | | | | | | |
| Heavy calcium carbonate (2) | % by mass | | | | | | 20 | | | | | | | |
| Heavy calcium carbonate (3) | % by mass | | | | | | | 20 | | | | | | |
| Heavy calcium carbonate (4) | % by mass | | | | | | | | 20 | | | | | |
| Light calcium carbonate | % by mass | | | | | | | | | 20 | 20 | 9 | 5 | 30 |
| Proportion of zinc element in calcium carbonate | ppm by mass | 4 | 4 | 4 | 4 | 4 | 4 | 3 | 1 | 0 | 0 | 0 | 0 | 0 |
| Proportion of zinc element in resin composition | ppm by mass | 0.8 | 0.8 | 0.36 | 0.2 | 0.12 | 0.8 | 0.6 | 0.2 | 0 | 0 | 0 | 0 | 0 |
| **Effects** MFR changing rate (heat stability test) | % | 0.0 | 0.0 | 2.8 | 2.4 | 0.0 | 0.0 | 0.0 | 0.0 | 6.1 | 8.6 | 5.6 | 6.8 | 11.5 |
| MFR changing rate (hydrolysis test) | % | 25.0 | 26.5 | 25.0 | 23.8 | 27.3 | 28.1 | 26.7 | 25.0 | 36.4 | 31.4 | 36.1 | 36.4 | 34.6 |

As is clear from Table 2, it can be seen that, in a case where the resin composition includes a biodegradable resin (A) and calcium carbonate and the calcium carbonate contains a zinc element, the resin composition is excellent in heat

24

stability and hydrolysis stability.

INDUSTRIAL APPLICABILITY

The biodegradable resin composition according to the present embodiment is excellent in heat stability during melting and excellent in hydrolysis stability during use, and therefore can be suitably used for a method involving heating, for formation of, for example, a film, a sheet, an injection-molded article, a blow molded article, a vacuum molded article, an extrusion molded article, or a fiber. Furthermore, the resin composition of the present invention is high in hydrolysis stability, and therefore can elongate the shelf life of a resin raw material before processing and the shelf life of a product after processing.

**Claims**

1.  A biodegradable resin composition comprising a biodegradable resin (A) and a zinc element, wherein

    a content of the zinc element is 0.001 ppm by mass or more and 7000 ppm by mass or less, and
    the biodegradable resin (A) at least contains any of

        (i) a polyester containing an aliphatic diol-derived constituent unit and an aliphatic dicarboxylic acid-derived constituent unit as main constituent units, and
        (ii) a polyester containing an aliphatic diol-derived constituent unit, an aliphatic dicarboxylic acid-derived constituent unit, and an aromatic dicarboxylic acid-derived constituent unit as main constituent units.

2.  The biodegradable resin composition according to claim 1, wherein the aliphatic dicarboxylic acid-derived constituent unit has 2 to 30 carbon atoms.

3.  The biodegradable resin composition according to claim 1, wherein the aromatic dicarboxylic acid-derived constituent unit has 6 to 12 carbon atoms.

4.  The biodegradable resin composition according to claim 1, wherein the aliphatic diol-derived constituent unit has 2 to 30 carbon atoms.

5.  The biodegradable resin composition according to claim 1, wherein the aromatic dicarboxylic acid-derived constituent unit is terephthalic acid.

6.  The biodegradable resin composition according to claim 1, wherein the aliphatic dicarboxylic acid-derived constituent unit is succinic acid.

7.  The biodegradable resin composition according to claim 1, wherein a content of the aliphatic dicarboxylic acid-derived constituent unit is 40% by mol or more based on a total of the aliphatic dicarboxylic acid-derived constituent unit and the aromatic dicarboxylic acid-derived constituent unit contained in the entire resin in the biodegradable resin composition.

8.  The biodegradable resin composition according to claim 1, wherein a bio-based content of the biodegradable resin (A), as calculated based on ASTM D6866, is 20% or more.

9.  The biodegradable resin composition according to claim 1, further comprising an inorganic filler.

10. The biodegradable resin composition according to claim 9, comprising calcium carbonate as the inorganic filler.

11. The biodegradable resin composition according to claim 10, wherein the calcium carbonate is heavy calcium carbonate.

12. A molded body formed with the biodegradable resin composition according to any one of claims 1 to 11.

## INTERNATIONAL SEARCH REPORT

| International application No. |
| --- |
| **PCT/JP2024/012259** |

### A. CLASSIFICATION OF SUBJECT MATTER

*C08L 67/02*(2006.01)i; *C08G 63/181*(2006.01)i; *C08K 3/013*(2018.01)i; *C08K 3/105*(2018.01)i; *C08K 3/26*(2006.01)i; *C08L 67/03*(2006.01)i; *C08L 101/16*(2006.01)i

FI: C08L67/02 ZBP; C08G63/181; C08K3/013; C08K3/105; C08K3/26; C08L67/03; C08L101/16

According to International Patent Classification (IPC) or to both national classification and IPC

### B. FIELDS SEARCHED

Minimum documentation searched (classification system followed by classification symbols)

C08L67/02; C08G63/181; C08K3/013; C08K3/105; C08K3/26; C08L67/03; C08L101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2023-24333 A (MITSUBISHI CHEMICAL CORPORATION) 16 February 2023 (2023-02-16)<br>claims, paragraphs [0086]-[0088], [0092]-[0094], table 1, example 5 | 1-12 |
| X | JP 2009-51210 A (MITSUBISHI CHEMICAL CORPORATION) 12 March 2009 (2009-03-12)<br>claims, paragraph [0196], table 1, examples 2-6, 8-11, comparative example 3 | 1-12 |
| A | JP 2014-90704 A (MITSUBISHI PLASTICS, INC.) 19 May 2014 (2014-05-19)<br>paragraph [0040] | 1-12 |

☐ Further documents are listed in the continuation of Box C.    ☑ See patent family annex.

\* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| **24 May 2024** | **04 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
**Information on patent family members**

International application No.

**PCT/JP2024/012259**

| Patent document cited in search report | | | Publication date (day/month/year) | Patent family member(s) | Publication date (day/month/year) |
|---|---|---|---|---|---|
| JP | 2023-24333 | A | 16 February 2023 | (Family: none) | |
| JP | 2009-51210 | A | 12 March 2009 | (Family: none) | |
| JP | 2014-90704 | A | 19 May 2014 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003313436 A